# EUROPÄISCHE PATENTSCHRIFT

(11) **EP 0 412 618 B1**
(45) Veröffentlichungstag und Bekanntmachung des Hinweises auf die Patenterteilung: **02.06.1993**
(21) Anmeldenummer: 90202146.8
(22) Anmeldetag: 07.08.1990
(51) Int. Cl.: G01P 3/48

(54) **Adaptive Drehzahlmessvorrichtung**
Adaptive rotational speed measuring apparatus
Dispositif de mesure adaptive de vitesse de rotation

(30) Priorität: 11.08.1989 DE 3926617
(43) Veröffentlichungstag der Anmeldung: 13.02.1991
(73) Patentinhaber: Philips Patentverwaltung GmbH, 22335 Hamburg (DE); Philips Electronics N.V., 5621 BA Eindhoven (NL)
(72) Erfinder: Petersen, August, NL-2359 Henstedt-Ulzburg (NL)
(74) Vertreter: Kupfermann, Fritz-Joachim, Dipl.-Ing.

(56) Entgegenhaltungen:
- US-A- 4 293 814
- US-A- 4 433 300
- PATENT ABSTRACTS OF JAPAN, Band 8, Nr. 278 (P-322)[1715], 19. Dezember 1984; & JP-A-59 145 968 (CANON K.K.) 21-08-1984

## Beschreibung

Die Erfindung betrifft eine adaptive Drehzahlmeßvorrichtung mit einem Drehzahlsensor und Mitteln zum Vergleichen und Auswerten des Sensorsignals des Drehzahlsensors zur Erzeugung eines dementsprechenden digitalen Ausgangssignals.

Sensoren für zeitlich periodische Signale, z.B. Drehzahlsensoren, die z.B. bei Antiblockiersystemen, Antischlupfsystemen usw. eingesetzt werden können, liefern in der Regel ein relativ kleines wechselndes Sensorsignal, das mit einer Gleichspannung, bzw. Offset-Spannung überlagert ist. Über einen Komparator wird dieses wechselnde mit Schwankungen behaftete Sensorsignal digitalisiert, d.h. in ein dementsprechendes Rechtecksignal gewandelt und einer weiteren Auswertung zugeführt.

Meßvorrichtungen dieser Art sind bekannt. Sie weisen in der Regel ein Zahnrad auf, dessen Drehzahlsignal über beispielsweise einen magnetisch arbeitenden Drehzahlsensor abgetastet wird. Das Sensorsignal wird dann verstärkt und als Eingangssignal einem Komparator zugeführt, dem eine Auswerteschaltung zur Erzeugung des Ausgangssignals nachgeordnet ist. Es ist möglich, den Komparator mit einer fest eingestellten, d.h. konstanten Referenzspannung zu betreiben. Dies erfordert jedoch einen hohen Abgleichaufwand und eine große Stabilität aller Komponenten, weshalb häufig eine mitlaufende Referenzspannung dem Komparator zugeführt wird. Diese mitlaufende Referenzspannung wird in der Regel über ein RC-Glied gewonnen, ist jedoch nur oberhalb einer unteren Grenzfrequenz wirksam.

Dies stellt beispielsweise bei Antiblockiersystemen, Antischlupfsystemen oder auch Tachometer-Signalgebern einen erheblichen Nachteil dar. Z.B. ist ein Antiblockiersystem deshalb unterhalb einer Geschwindigkeit eines damit ausgerüsteten Fahrzeuges von einigen Kilometern pro Stunde nicht mehr wirksam. Die Räder des Fahrzeuges können in diesem Geschwindigkeitsbereich also auch blockieren.

Eine entsprechende Schaltung ist aus der US-A-4 293 814 bekannt. Diese Schaltung weist ebenfalls ein Zahnrad auf, dessen Drehzahlsignale mit Hilfe eines magnetisch arbeitenden Drehzahlsensors erfaßt und einem nachgeordneten Verstärker sowie einer Komparator- und Auswerteschaltung zugeführt werden, um ein digitales Ausgangssignal zu erzeugen. Die auch bei dieser Schaltung vorgesehene mitlaufende Referenzspannung wird über zwei RC-Glieder gewonnen, die jeweils die Signalform des wechselnden Sensorsignals zur Anpassung der Referenzspannung benutzen. Wegen der verwendeten RC-Glieder haftet auch dieser Schaltung der Nachteil an, nicht unterhalb einer unteren Grenzfrequenz wirksam zu sein.

Um dieses Problem zu vermeiden, ist es bekannt, auf digitalem Wege die Signalform des Sensorsignals zu erfassen und für eine mitlaufende Referenzspannung auszunutzen. Obgleich bei einer derartigen Schaltung keine einschränkende untere Grenzfrequenz vorhanden ist, so ist nachteilig vor dem Anlauf die Erfassung von ein bis zwei Signalperioden erforderlich, um das Signalniveau zu erfassen. Eine entsprechende Schaltung erfordert einen verhältnismäßig hohen Aufwand, eventuell sogar einen Prozessor und ist daher auch aus Kostengründen für Massenprodukte wenig geeignet.

Eine Meßvorrichtung mit einem Fenskerkomparator ist aus der JP-A-59-145968 bekannt.

Der Erfindung liegt die Aufgabe zugrunde, eine adaptive Drehzahlmeßvorrichtung zu schaffen, die auch bei großen Offset-Spannungstoleranzen und Verschiebungen das Sensorsignal eindeutig identifiziert und einen einfachen und gegen sonstige Störungen robusten Aufbau aufweist.

Erfindungsgemäß wird diese Aufgabe dadurch gelöst, daß die Mittel zum Vergleichen einen Fensterkomparator mit verschiebbarem Fenster mit einem durch die Differenz zweier Referenzspannungen definierten Fensterbereich vorbestimmter Größe enthalten, der über mindestens ein logisches Schaltglied ein Flip-Flop zur Abgabe des Ausgangssignals ansteuert, und daß dem Fensterkomparator weitere Mittel nachgeordnet sind, die in Abhängigkeit von den angehobenen oder abgesenkten Werten des Sensorsignals fortlaufend die Referenzsspannungen für den Fensterkomparator derart anpassen, daß das Fenster dem Sensorsignal folgt, wobei die Ansteuerung des Flip-Flop so ausgebildet ist, daß die Richtungsumkehr der Fensterverschiebung beim Erreichen der Maxima bzw. Minima des Sensorsignals zur Abgabe des Ausgangssignals erfaßt wird.

Eine bevorzugte Ausgestaltung der Erfindung ist dadurch gekennzeichnet, daß der Fensterkomparator mindestens einen ersten und einen zweiten Komparator aufweist, daß an dem negativen Eingang des ersten und am positiven Eingang des zweiten Komparators ein de Sensorsignal proportionales Eingangssignal anliegt, und daß an den anderen Eingängen der Komparatoren Referenzspannungen anliegen und der Ausgang des ersten und des zweiten Komparators mit jeweils einem ersten bzw. einem zweiten logischen Schaltglied verbunden ist.

Eine weitere bevorzugte Ausgestaltung ist dadurch gekennzeichnet, daß jedes logische Schaltglied ein NOR-Glied ist, wobei die NOR-Glieder eingangsseitig mit je einem der Komparatoren, ausgangsseitig mit je einem Eingang des Flip-Flops und eingangs- wie ausgangsseitig mit den Mitteln zur Erzeugung der Referenzspannungen verbunden sind.

Gemäß einer weiteren bevorzugten Ausgestaltung der Erfindung weisen die Mittel zur Erzeugung der Referenzspannungen einen Oszillator, der die NOR-Glieder mit einem Takt versorgt, einen Zähler mit einem nachgeordenten D/A-Wandler und ein erstes und ein zweites Addierglied auf, wobei der aufwärtszählende Eingang des Zählers mit dem Ausgang des ersten NOR-Glieds und der abwärtszählende Eingang mit dem Ausgang des zweiten NOR-Gliedes verbunden ist, das erste Addierglied dem Ausgangssignal des D/A-Wandlers ein vorbestimmtes Differenzsiganl hinzuaddiert und das resultierende Signal als erste Referenzspannung am ersten Komparator anliegt und das zweite Addierglied von dem Ausgangssignal des D/A-Wandlers das Differenzsignal abzieht und das resultierende Signal als zweite Referenzspannung dem zweiten Komparator zuführt.

Erfindungsgemäß wird somit das Eingangssignal, das dem Sensorsignal entspricht, dem aus zwei Komparatoren bestehenden Fensterkomparator zugeführt. Die Referenzspannungen dieser Komparatoren stellen sich aus einem dem Zählerstand entsprechenden Signal über den D/A-Wandler, sowie einem additiven und negativen Zuschlag eines vorbestimmten Differenzsignals ein. Beim Einschalten der Vorrichtung sind entsprechend einem zufälligen Niveau des Eingangssignals im Moment des Einschaltens drei Betriebszustände möglich. Bei einem Betriebszustand liegen die Pegel der Ausgänge der Komparatoren im logischen Zustand EINS und es findet keine Aktivität statt, d.h. der Takt des Oszillators gelangt nicht auf die folgenden Stufen. Bei diesem Betriebszustand liegt das Eingangssignal im Fensterbereich des Komparators. Die beiden anderen Einschaltzustände ergeben sich, wenn das Eingangssignal außerhalb des Fensterbereiches des Fensterkomparators liegt. In diesen Fällen gelangt der Takt des Oszillators über eines der NOR-Glieder auf den Zähler. Je nachdem, ob das Eingangssignal oberhalb oder unterhalb des Fensterbereichs liegt, wird im Zähler entweder auf- oder abgezählt, bis der nachgeordnete D/A-Wandler ein Signal abgibt, das etwa dem Eingangssignal entspricht und somit wieder ein Zustand hergestellt ist, bei dem das Eingangssignal im Fensterbereich liegt.

Während des weiteren Betriebes folgt das Signal am Ausgang des D/A-Wandlers dem Eingangssignal. Steigt das Eingangssignal, so führt dies zu einer Impulsserie am aufwärtszählenden Eingang des Zählers, während ein sinkendes Eingangssignal eine entsprechende Impulsserie am abwärtszählenden Eingang des Zählers auslöst. Die Richtungsumkehr beim Erreichen der Minima bzw. Maxima des Eingangssignals läßt sich daher mit einem einfachen Flip-Flop erfassen. Das Flip-Flop wird jeweils mit dem ersten Impuls einer gegenläufigen Impulsserie umgesetzt und erzeugt somit das gewünschte digitalisierte Ausgangssignal.

Erfindungsgemäß kann die Meßvorrichtung gegenüber Störeinflüssen robust dimensioniert werden. Sind z.B. impulsartige von Natur aus kleine Störsignale auf dem Sensorsignal zu befürchten, die z.B. durch Vibration der mechanischen Konstruktion entstehen können, so kann unerwünschtes Schalten mit einer eingeschränkten Auflösung des Komparatorfensters und des D/A-Wandlers verhindert werden, da dann Signale unter einem Grenzwert nicht erfaßt werden.

Bei sehr langsamen Sensorsignalen können Schwingungen der Komparatoren zum Fehlschalten führen. Vorteilhaft kann dann ein Mitkopplungswiderstand vorgesehen sein, der eine Schalthysterese hervorruft. Die Schalthysterese sollte dann deutlich kleiner als die Breite des Komparatorfensters sein.

Bei einigen Anwendungsfällen kann das Sensorsignal in den Maxima/Minima-Bereichen eingedellt sein. Damit dies nicht zum Fehlschalten führt, ist erfindungsgemäß eine Oszillatorfrequenz vorgesehen, die nicht wesentlich größer ist als die Sensorfrequenz, so daß das Fenster des Fensterkomparators dem Sensorsignal nicht mehr folgt, sondern nur noch nachläuft.

Ein Ausführungsbeispiel der Erfindung wird nachfolgend unter Bezugnahme auf die Zeichnung näher erläutert. Es zeigt:
Fig. 1 den prinzipiellen Aufbau einer erfindungsgemäßen Drehzahlmeßvorrichtung,
Fig. 2 den Aufbau einer erfindungsgemäßen Vergleichs- und Auswerteeinrichtung, und
Fig. 3 den erfindungsgemäß nachführbaren Fensterbereich.

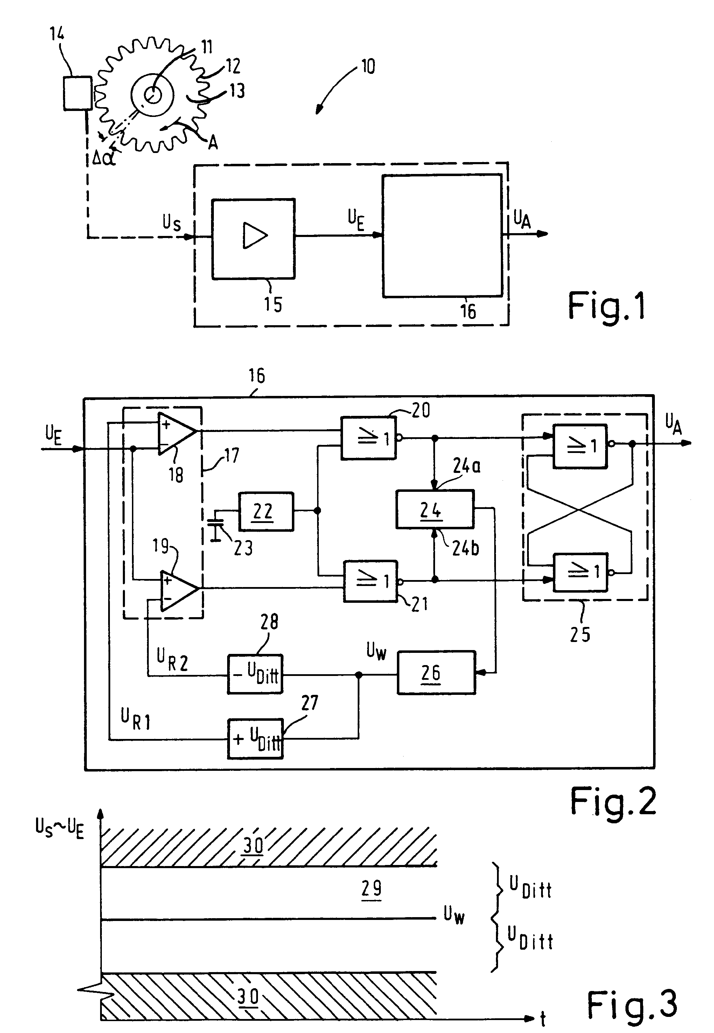

Fig. 1 zeigt prinzipiell den Aufbau einer erfindungsgemäßen Drehzahlmeßvorrichtung 10. Um die Drehzahl n einer Welle 11 festzustellen, z.B. der Achse eines Kraftfahrzeugrades, ist auf der Welle 11 ein mit mehreren Zähnen 12 versehenes Zahnrad 13 angeordnet, das sich in Pfeilrichtung A mit der Welle 11 mitdreht. Es dreht sich somit proportional zu der zu messenden Drehzahl n der Welle 11. Über einen an sich bekannten Drehzahlsensor 14 wird ein der zu messenden Drehzahl n proportionales Sensorsignal U_{S} erzeugt. Dieses Sensorsignal U_{S} kann einem Verstärker 15 zugeführt werden, an dessen Ausgang ein Eingangssignal U_{E} für eine nachgeschaltete Vergleichsund Auswerteeinrichtung 16 zur Verfügung steht. Der Verstärker 15 ist beispielsweise dann nötig, wenn als Drehzahlsensor 14 ein magnetisch arbeitender Sensor zum Einsatz gelangt, da dieser in der Regel nur ein sehr kleines Wechselspannungssignal liefert. Das Eingangssignal U_{E} ist somit ein dem Sensorsignal U_{S} proportionales Wechselspannungssignal, das mit einer Gleichspannung (Offset-Spannung) überlagert ist. Die Vergleichs- und Auswerteeinrichtung 16 ist derart aufgebaut, daß auch bei großen Offset-Spannungstoleranzen und -verschiebungen das dadurch angehobene oder abgesenkte Wechselspannungssignal des Eingangssignals U_{E} erkannt wird und ein dementsprechendes digitalisiertes Signal als Ausgangssignal U_{A} zur weiteren Verarbeitung zur Verfügung steht.

Fig. 2 zeigt den erfindungsgemäßen inneren Aufbau der Vergleichs- und Auswerteeinrichtung 16 im einzelnen. Als Mittel zum Vergleichen des Eingangssignals U_{E} ist im wesentlichen ein Fensterkomparator 17 vorgesehen, der zwei Komparatoren 18 und 19 aufweist. Das Eingangssignal U_{E} ist mit dem negativen Eingang des ersten Komparators 18 und dem positiven Eingang des zweiten Komparators 19 verbunden. Die Komparatoren 18 und 19 weisen je einen weiteren Eingang auf, die mit unterschiedlichen Referenzspannungen U_{R1} bzw. U_{R2} versorgt werden. Dem ersten Komparator 18 ist ein erstes logisches Schaltglied 20 und dem zweiten Komparator 19 ist ein zweites logisches Schaltglied 21 nachgeordnet. Vorzugsweise sind dies erste und zweite NOR-Glieder 20 und 21, die eingangsseitig mit einem Oszillator 22 verbunden sind, der als frequenzbestimmendes Glied einen Kondensator 23 verwendet. Der Oszillator 22 dient der Erzeugung eines Taktes, demgemäß ein Zähler 24 aufwärts oder abwärts zählt. Der aufwärtszählende Eingang 24a des Zählers 24 ist mit dem Ausgang des ersten NOR-Glieds 20 und der abwärtszählende Eingang 24b mit dem Ausgang des zweiten NOR-Glieds 21 verbunden. Die Ausgänge der NOR-Glieder 20 und 21 sind weiter mit je einem Eingang eines Flip-Flops 25 verbunden, an dessen Ausgang das gewünschte digitalisierte Sensorsignal U_{S} als Ausgangssignal U_{A} zur weiteren Verarbeitung zur Verfügung steht. Dem Zähler 24 ist ausgangsseitig ein Digital/Analog-Wandler (D/A-Wandler) 26 nachgeordnet, dessen Ausgangssignal U_{W} einem ersten und einem zweiten Addierglied 27 bzw. 28 zugeführt wird.

Im ersten Addierglied 27 wird dem Ausgangssignal U_{W} des D/A-Wandlers 26 ein vorgegebenes Differenzsignal U_{Diff} mit positivem Vorzeichen hinzuaddiert. Die derart erzeugte erste Referenzspannung U_{R1} liegt an dem positiven Eingang des ersten Komparators 18 des Fensterkomparators 17 an. Im zweiten Addierglied 28 wird dem Ausgangssignal U_{W} des D/A-Wandlers 26 das vorgegebene Differenzsignal U_{Diff} mit negativem Vorzeichen hinzuaddiert. Die am Ausgang des zweiten Addierglieds 28 dadurch erzeugte zweite Referenzspannung U_{R2} ist mit dem negativen Eingang des zweiten Komparators 19 des Fensterkomparators 17 verbunden. Durch den Fensterkomparator 17 und diese Auswerteschaltung ist es möglich, die Maxima und Minima des Sensorsignals U_{S} zu erkennen und ein korrespondierendes digitalisiertes Ausgangssignal U_{A} zu erzeugen.

Fig. 3 zeigt in einem Diagramm, in dem grundsätzlich das von der Zeit t und somit von der Drehzahl n abhängige Sensorsignal U_{S} dargestellt werden kann, unterschiedliche Fensterbereiche 29 und 30 des Fensterkomparators 17, in denen der Zähler 24 aktiviert oder nicht aktiviert wird. Das Ausgangssignal U_{W} des D/A-Wandlers 26 bildet dabei ein Niveau zur Bestimmung des Fensterbereichs 29 durch Addition und Subtraktion des Differenzsignals U_{Diff}. Die betragsmäßige Größe des Differenzsignals U_{Diff}, und somit die Größe des Fenster bereichs 29 ergibt sich aus der Funktion der Vergleichsund Auswerteeinrichtung 16, aus der gewünschten Störsicherheit gegenüber Störungen und letztlich aus den Minimal- und Maximalwerten, also den Extremwerten des Sensorsignals U_{S}.

Funktionsmäßig wird das Sensorsignal U_{S} dem Verstärker 15 zugeführt, der es als Eingangssignal U_{E} an den Fensterkomparator 17 abgibt. Deren erste und zweite Komparatoren 18 und 19 erhalten unterschiedliche Referenzspannungen U_{R1} bzw. U_{R2}, die aus dem Signal U_{W} gebildet sind, das sich aus dem Zählerstand des Zählers 24 über den D/A-Wandler 26 bildet. Zur Bildung der ersten Referenzspannung U_{R1} des ersten Komparators 18 ist U_{W} um das Differenzsignal U_{Diff} erhöht und zur Bildung der zweiten Referenzspannung U_{R2} des zweiten Komparators 19 um das Differenzsignal U_{Diff} vermindert. Beim Einschalten der Anordnung sind verschiedene Betriebszustände möglich. Liegt letztlich das Sensorsignal U_{S} im Fensterbereich 29, dann ergibt sich an den Ausgängen der Komparatoren 18 und 19 der logische Zustand EINS und es findet keine Aktivität statt. Der Takt des Oszillators 22 gelangt dann nicht auf die jeweils folgende Stufe. Nur wenn letztlich das Sensorsignal U_{S} oberhalb oder unterhalb des Fensterbereichs 29 im Fensterbereich 30 liegt, gelangt der Takt des Oszillators über eines der NOR-Glieder 20, 21 auf den Zähler 24. Der Zähler 24 ist dann solange wirksam, bis der nachgeordnete D/A-Wandler 26 ein derartiges Ausgangssignal U_{W} liefert, daß letztlich das Sensorsignal U_{S} wieder im Fensterbereich 29 liegt. Über das erste NOR-Glied 20 erhält der Zähler 24 additive Zählsignale und über das zweite NOR-Glied 21 negative Zählsignale, so daß der Fensterbereich Schwankungen (Anhebungen oder Absenkungen) des Sensorsignals U_{S} in beiden Richtungen folgen kann. Eine steigende Signalspannung U_{S} führt während des weiteren Betriebs zu einer Impulsserie am aufwärtszählenden Eingang 24a des Zählers 24, und eine fallende Signalspannung U_{S} zu einer entsprechenden Serie am abwärtszählenden Eingang 24b des Zählers 24. Die Richtungsumkehr bei den Maximal- und Minimalwerten der Signalspannung U_{S} läßt sich daher mit dem einfachen Flip-Flop 25 erfassen, das jeweils mit dem ersten Impuls einer gegenläufigen Impulsserie umgesetzt wird.

In vorteilhafter Weise lassen sich bei der erfindungsgemäßen Vorrichtung Störeinflüsse besonders berücksichtigen, die bei den eingangs genannten Anwendungen häufig auftreten. So lassen sich beispielsweise Störungen durch impulsartige Störsignale des Sensorsignals U_{S}, die z.B durch Vibration der mechanischen Konstruktion entstehen können, und nicht zum Schalten führen sollen, vermeiden. Denn die Amplitude dieser Störsignale ist begrenzt, so daß mit einer entsprechend angepaßten Auflösung des Fensters des Fensterkomparators 17 und des D/A-Wandlers 26 Signale unter einem Grenzwert nicht erfaßt werden. Ferner können Neigungen zum Schwingen der Komparatoren 18 und 19 bei sehr langsamen Sensorsignalen zum Schalten führen. Mit einem nicht dargestellten Mitkopplungswiderstand kann in diesem Fall eine Schalthysterese vorgesehen werden. Um ein unbeabsichtigtes Schalten sicher zu vermeiden, sollte die Hysterese deutlich kleiner als das Doppelte des Differenzsignals U_{Diff} sein. Bei besonderen Anwendungsbedingungen kann das Sensorsignal U_{S} in seinen Maximal- und Minimalwerten eingedellt sein. Dies kann bei der vorliegenden Extremwerterkennung zu unerwünschtem Schalten führen, dem aber durch die Auflösung des Fensters des Fensterkomparators 17 und des D/A-Wandlers 26 in Grenzen begegnet werden kann. Bei größeren Verformungen kann es notwendig sein, die Frequenz des Oszillators 22 so einzustellen, daß das Fenster des Komparators 17 dem Sensorsignal U_{S} nicht mehr folgt sondern nur noch nachläuft. Hier sei angemerkt, daß alle genannten Signalwerte vorteilhaft elektrische Spannungen sind.

## Patentansprüche

1. Adaptive Drehzahlmeßvorrichtung mit einem Drehzahlsensor und Mitteln zum Vergleichen und Auswerten des Sensorsignals des Drehzahlsensors zur Erzeugung eines dementsprechenden digitalen Ausgangssignals,
dadurch gekennzeichnet, daß die Mittel zum Vergleichen einen Fensterkomparator (17) mit verschiebbarem Fenster mit einem durch die Differenz zweier Referenzspannungen (U_{R1}, U_{R2}) definierten Fensterbereich vorbestimmter Größe enthalten, der über mindestens ein logisches Schaltglied (20, 21) ein Flip-Flop (25) zur Abgabe des Ausgangssignals (U_{A}) ansteuert, und daß dem Fensterkomparator (17) weitere Mittel nachgeordnet sind, die in Abhängigkeit von den angehobenen oder abgesenkten Werten des Sensorsignals (U_{S}) fortlaufend die Referenzsspannungen (R_{R1}, U_{R2}) für den Fensterkomparator (17) derart anpassen, daß das Fenster dem Sensorsignal folgt, wobei die Ansteuerung des Flip-Flop (25) so ausgebildet ist, daß die Richtungsumkehr der Fensterverschiebung beim Erreichen der Maxima bzw. Minima des Sensorsignals zur Abgabe des Ausgangssignals erfaßt wird.

2. Meßvorrichtung nach Anspruch 1,
dadurch gekennzeichnet, daß der Fensterkomparator (17) mindestens einen ersten und einen zweiten Komparator (18, 19) aufweist, daß an dem negativen Eingang des ersten Komparators (18) und an dem positiven Eingang des zweiten Komparators (19) ein dem Sensorsignal (U_{S}) proportionales Eingangssignal (U_{E}) anliegt, und daß an den anderen Eingängen der Komparatoren (18, 19) Referenzspannungen (U_{R}₁, U_{R2}) anliegen und der Ausgang des ersten und des zweiten Komparators (18, 19) mit jeweils einem ersten bzw. zweiten logischen Schaltglied (20, 21) verbunden ist.

3. Meßvorrichtung nach Anspruch 2,
dadurch gekennzeichnet, daß jedes logische Schaltglied ein NOR-Glied (20, 21) ist, das eingangsseitig mit je einem der Komparatoren (18, 19), ausgangsseitig mit je einem Eingang des Flip-Flops (25) und eingangs- wie ausgangsseitig mit den Mitteln zur Erzeugung der Referenzspannungen (U_{R1}, U_{R2}) verbunden ist.

4. Meßvorrichtung nach Anspruch 3,
dadurch gekennzeichnet, daß die Mittel zur Erzeugung der Referenzspannungen (U_{R1}, U_{R2}) einen Oszillator (22), der die NOR-Glieder (20, 21) mit einem Takt versorgt, einen Zähler (24) mit einem nachgeordneten D/A-Wandler (26) und ein erstes und ein zweites Addierglied (27, 28) aufweisen, wobei der aufwärtszählende Eingang (24a) des Zählers (24) mit dem Ausgang des ersten NOR-Glieds (20) und der abwärtszählende Eingang (24b) mit dem Ausgang des zweiten NOR-Glieds (21) verbunden ist, das erste Addierglied (27) dem Ausgangssignal (U_{W}) des D/A-Wandlers (26) ein vorbestimmtes Differenzsignal (U_{Diff}) hinzuaddiert und das resultierende Signal als erste Referenzspannung (U_{R1}) am ersten Komparator (18) anliegt und das zweite Addierglied (28) von dem Ausgangssignal (U_{W}) des D/A-Wandlers (26) das Differenzsignal (U_{Diff}) abzieht und das resultierende Signals als Referenzspannung (U_{R2}) dem zweiten Komparator (19) zugeführt.

5. Meßvorrichtung nach einem der vorhergehenden Ansprüche,
gekennzeichnet durch eine eingeschränkte Auflösung des Fensters des Fensterkomparators (17) und des D/A-Wandlers (26) zur Vermeidung von negativen Auswirkungen von impulsartigen Störungen des Eingangssignals (U_{E}).

6. Meßvorrichtung nach Anspruch 5,
dadurch gekennzeichnet, daß mit einem Mitkopplungswiderstand eine Schalthysterese vorgesehen ist, die kleiner als der Fensterbereich (29) ist, um bei sehr langsamen Sensorsignalen (U_{S}) Schwingungen der Komparatoren (18, 19) zu vermeiden.

7. Meßvorrichtung nach Anspruch 6,
dadurch gekennzeichnet, daß im Fall von Eindellungen letztlich des Sensorsignals (U_{S}) in den Maximal- und Minimalwerten die Frequenz des Oszillators (22) nicht wesentlich größer als die Frequenz des Sensorsignals (U_{S}) gewählt wird, so daß das Fenster nur noch nachläuft.

## Claims

1. An adaptive revolution measuring apparatus, comprising a revolution sensor and means for comparing and evaluating the sensor signal of the revolution sensor in order to generate a corresponding digital output signal, characterized in that the means for comparing comprise a window comparator (17) with a displaceable window having a window region whose magnitude is determined by the difference between two reference voltages (U_{R}₁, U_{R2}), which comparator drives, via at least one logic switching element (20, 21), a flip-flop (25) to produce the output signal (U_{A}), and in that downstream of the window comparator (17) further means are provided which continuously adapt the reference voltages (U_{R}₁, U_{R2}) for the window comparator (17) as a function of the raised or lowered values of the sensor signal (U_{S}), so that the window follows the sensor signal, the flip-flop control being conceived so that the reversal of the direction of the window displacement upon reaching of the maximum and minimum values of the sensor signal is detected so as to supply the output signal.

2. A measuring apparatus according to Claim 1, characterized in that the window comparator (17) comprises at least one first and one second comparator (18, 19), in that an input signal (U_{E}) proportional to the sensor signal (U_{S}) is present at the negative input of the first comparator (18) and at the positive input of the second comparator (19), and in that reference voltages (U_{R}₁, U_{R}₂) are present at the other inputs of the comparators (18, 19), the output of the first comparator and of the second comparator (18, 19) being connected to a first and a second logic switching element (20, 21), respectively.

3. A measuring apparatus according to Claim 2, characterized in that each logic switching element is a NOR-element (20, 21) which is connected on the input side to a respective one of the comparators (18, 19), on the output side to a respective input of the flip-flop (25), and on the input side as well as on the output side to the means for generating the reference voltages (U_{R}₁, U_{R}₂).

4. Measuring apparatus according to Claim 3, characterized in that the means for generating the reference voltages (U_{R}₁, U_{R}₂) comprise an oscillator (22) which supplies the NOR-element (20, 21) with a clock pulse, a counter (24) with a downstream D/A converter (26), and a first and a second adder member (27, 28), the up-count input (24a) of the counter (24) being connected to the output of the first NOR-element (20), and the down-count input (24b) being connected to the output of the second NOR-element (21), the first adder member (27) adding a predetermined difference signal (U_{Diff}) to the output signal (U_{W}) of the DAC (26) and the resultant signal being present at the first comparator (18) as a first reference voltage (U_{R}₁), and the second adder member (28) subtracting the difference signal (U_{Diff}) from the output signal (U_{W}) of the DAC (26) and feeding the resultant signal to the second comparator (19) as a reference voltage (U_{R}₂).

5. A measuring apparatus according to any one of the preceding Claims, characterized in that the resolution of the window of the window comparator (17) and of the DAC (26) is restricted in order to avoid negative effects of pulse-like disturbances of the input signal (U_{E}).

6. A measuring apparatus according to Claim 5, characterized in that a regenerative resistor provides a switching hysteresis which is smaller than the window region (29) in order to avoid oscillations of the comparators (18, 19) in the case of very slow sensor signals (U_{S}).

7. A measuring apparatus according to claim 6, characterized in that when ultimately the sensor signal (U_{S}) has depressions in the maximum and minimum values, the frequency of the oscillator (22) is chosen to be not substantially higher than the frequency of the sensor signal (U_{S}), so that the window only tracks.

## Revendications

1. Dispositif de mesure adaptative de la vitesse muni d'un capteur de vitesse et de moyens pour comparer et traiter le signal issu du capteur de vitesse pour engendrer un signal de sortie numérique correspondant, caractérisé en ce que les moyens comparateurs (17) comportent un comparateur à fenêtre présentant une fenêtre viable couvrant un domaine de largeur prédéterminée, défini par la différence entre deux tensions de référence (U_{R}₁, U_{R}₂), comparateur qui, à travers au moins un circuit de porte logique (20, 21), excite une bascule (25) pour délivrer le signal de sortie (U_{A}), et en ce que, en aval du comparateur à fenêtre (17), sont disposés d'autres moyens qui, en fonction des valeurs augmentées ou diminuées du signal de capteur (U_{S}), adaptent continûment les tensions de référence (U_{R}₁, U_{R}₂) pour le comparateur à fenêtre (17), de telle manière que la fenêtre suit le signal de capteur, l'excitation de la bascule (25) étant conçue de façon que l'inversion de sens du décalage de la fenêtre se produisant lorsque les valeurs maximale ou minimale du signal de capteur sont atteintes, est détectée pour délivrer le signal de sortie.

2. Dispositif de mesure selon la revendication 1, caractérisé en ce que le comparateur à fenêtre (17) présente au moins un premier et un second comparateur (18, 19), en ce que sur l'entrée négative du premier comparateur (18) et sur l'entrée positive du second comparateur (19), est présent un signal d'entrée (U_{E}) proportionnel au signal de capteur (U_{S}), en ce que sur les autres entrées des comparateurs (18, 19) sont présentes des tensions de référence (U_{R}₁, U_{R}₂) et en ce que les sorties du premier et du second comparateur (18, 19) sont reliées respectivement à une première et à une seconde porte logique (20, 21).

3. Dispositif de mesure selon la revendication 2, caractérisé en ce que chaque porte logique est une porte NI (20, 21) qui et reliée en entrée à l'un des comparateurs (18, 19), en sortie à l'une des entrées de la bascule (25) ainsi que, en entrée et en sortie, aux moyens de génération des tensions de référence (U_{R}₁, U_{R}₂).

4. Dispositif de mesure selon la revendication 3, caractérisé en ce que les moyens de génération des tensions de référence (U_{R}₁, U_{R}₂) présentent un oscillateur (22) fournissant un signal d'horloge aux portes NI (20, 21), un compteur (24) suivi d'un convertisseur numérique analogique (26) et un premier et un second additionneur (27, 28), l'entrée de comptage positif (24a) du compteur (24) étant reliée à la sortie de la première porte NI (20) et l'entrée de comptage à rebours (24b) étant reliée à la sortie de la seconde porte NI (21), le premier additionneur (27) ajoutant un signal de différence prédéterminé (U_{Diff}) au signal de sortie (U_{W}) du convertisseur numérique-analogique (26) et appliquant le signal résultant comme première tension de référence (U_{R}₁) au premier comparateur (18) et le second additionneur (28) déduisant le signal de différence (U_{Diff}) du signal de sortie (U_{W}) du convertisseur numérique-analogique (26) et appliquant le signal résultant comme seconde tension de référence (U_{R}₂) au second comparateur (19).

5. Dispositif de mesure selon l'une des revendications précédentes, caractérisé par une résolution limitée de la fenêtre du comparateur à fenêtre (17) et du convertisseur numérique-analogique (26) pour éviter des effets négatifs exercés par des perturbations impulsionnelles du signal d'entrée (U_{E}).

6. Dispositif de mesure selon la revendication 5, caractérisé en ce qu'une résistance à réaction assure une hystérésis de commutation, inférieure au domaine de fenêtre (29), pour éviter des oscillations des comparateurs (18, 19) dans le cas de signaux de capteur (U_{S}) très lents.

7. Dispositif de mesure selon la revendication 6, caractérisé en ce que, dans le cas où le signal de capteur (U_{S}) présente finalement des creux aux valeurs maximale et minimale, la fréquence de l'oscillateur (22) est choisie de façon à ne pas être sensiblement supérieure à la fréquence du signal de capteur (U_{S}), de sorte que la fenêtre ne fait plus que rester en retard sur ce signal.
